# EUROPÄISCHE PATENTANMELDUNG

(11) **EP 1 057 680 A1**
(43) Veröffentlichungstag der Anmeldung: **06.12.2000**
(21) Anmeldenummer: 00109314.5
(22) Anmeldetag: 29.04.2000
(51) Int. Cl.: B60K 31/04, G05B 5/00

(54) **Verfahren und Regelsystem zur Einstellung eines Offsets einer vorgebbaren Fahrzeug-Zielgeschwindigkeit**

(30) Priorität: 31.05.1999 DE 19924941
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Einstellung einer vorgebbaren Fahrzeug-Zielgeschwindigkeit werden unter Berücksichtigung von Fahrzeug-Zustands- und Betriebsgrößen in einem Geschwindigkeits-Regelsystem Stellsignale zur Manipulation des Motors und/oder des Getriebes des Kraftfahrzeugs erzeugt.

Um zu vermeiden, daß bei Annäherung an die Zielgeschwindigkeit ein Überschwingen stattfindet, wird eine von der Zielgeschwindigkeit abweichende Ersatzgeschwindigkeit vorgegeben, die durch Beaufschlagung der Zielgeschwindigkeit mit einem Offset gebildet wird, wobei die Ersatzgeschwindigkeit entsprechend der aktuellen Fahrzeuggeschwindigkeit oberhalb oder unterhalb der Zielgeschwindigkeit liegt. Beim Annähern der aktuellen Fahrzeuggeschwindigkeit an die Zielgeschwindigkeit wird die Ersatzgeschwindigkeit für die Geschwindigkeitsregelung herangezogen.

## Beschreibung

Die Erfindung betrifft ein Verfahren und ein Regelsystem zur Einstellung einer vorgebbaren Fahrzeug-Zielgeschwindigkeit nach dem Oberbegriff des Anspruches 1 bzw. 11.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine in Abstands-Regelungssystemen automatisch ermittelte Höchstgeschwindigkeit nicht überschreiten darf. Zur Umsetzung der Begrenzer-Funktion werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Zielgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, mit dem die reguläre Getriebeschaltlogik durchbrochen wird, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Die Gangbegrenzung wird nach dem Erreichen der gewünschten Höchstgeschwindigkeit wieder aufgehoben und die reguläre Getriebeschaltlogik wieder in Kraft gesetzt.

Bei der Annäherung der Fahrzeug-Istgeschwindigkeit an die Zielgeschwindigkeit kann die Zielgeschwindigkeit während des Einschwingvorganges kurzzeitig über- bzw. unterschritten werden. Dieser Effekt, der unter dem Begriff 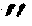 Durchtauchen" bekannt ist, tritt bei allen gängigen, linearen Standardreglern mit proportionalem, integralem und/oder differentiellem Anteil auf. Die Amplitude des überschwingenden Anteils wird hierbei umso größer, je größer der Geschwindigkeitsgradient im Bereich der Überschreitung der Zielgeschwindigkeit ist, das heißt, je schneller die Fahrzeug-Istgeschwindigkeit an die Zielgeschwindigkeit angenähert wird.

Das Überschwingen wird oftmals vom Fahrer als unangenehm empfunden und kann zu Irritationen führen. Außerdem besteht die Gefahr, daß zur Kompensation des Überschwingens Schaltwechsel im Automatikgetriebe durchgeführt werden, die bei einer Rückschwingung sofort wieder rückgängig gemacht werden. Die unmittelbar aufeinanderfolgenden Schaltwechsel werden ebenfalls als störend empfunden.

In der Druckschrift DE 37 01 331 A1 ist ein Verfahren bzw. ein Regelsystem zur Einstellung einer Fahrzeug-Zielgeschwindigkeit offenbart, wobei zur Vermeidung unnötig großer Beschleunigungen bei der Ausregelung der Fahrzeuggeschwindigkeit ein Geschwindigkeitsersatzwert vorgegeben wird, der von der Zielgeschwindigkeit abweicht. Die Ersatzgeschwindigkeit berechnet sich nach einer vorgegebenen Funktion, in die die tatsächliche Fahrzeuggeschwindigkeit einfließt. Die Ersatzgeschwindigkeit wird kontinuierlich in jedem neuen Durchgang des Verfahrens aktualisiert, wobei auf Grund der sich an die Zielgeschwindigkeit annähernden tatsächlichen Fahrzeuggeschwindigkeit auch die Ersatzgeschwindigkeit im Laufe des Verfahrens immer mehr an die Zielgeschwindigkeit angeglichen wird, mit der Folge, dass die Ersatzgeschwindigkeit kontinuierlich an die Zielgeschwindigkeit angeglichen und der Offset zwischen Zielgeschwindigkeit und Ersatzgeschwindigkeit kontinuierlich verringert wird. Bei einer derartig kontinuierlichen Anpassung der Fahrzeuggeschwindigkeit auf die Zielgeschwindigkeit muss für jeden neu ermittelten Wert der Ersatzgeschwindigkeit auch ein neuer Parameterersatz für Zündung, Einspritzung, Luftzufuhr und das Getriebe ermittelt und realisiert werden, was eine permanente Änderung der entsprechenden Stellelemente zur Folge hat. Auf Grund unterschiedlicher Reaktionszeiten muss die Anpassung dieser Stellelemente auf die Reaktionszeit des am langsamsten reagierenden Stellelements synchronisiert werden, da andernfalls die Gefahr besteht, dass ein stöchiometrisches Kraftstoff-Luft-Gemisch nicht eingestellt werden kann. Hierdurch verzögert sich die Einstellung der gewünschten Zielgeschwindigkeit. Ein weiterer Nachteil dieses Systems liegt in dem hohen Rechen- und Stellaufwand.

Die Druckschrift DE 42 42 169 A1 behandelt das Problem der Reaktivierung eines Geschwindigkeits-Regelsystems, nachdem dieses ausgeschaltet worden ist. Nach der Reaktivierung wird die Sollgeschwindigkeit vom vorangegangenen Sollwert auf den aktuellen Sollwert in Schritten angenähert. Bei der schrittweisen Annäherung von der ursprünglichen Sollgeschwindigkeit auf die aktuell geltende Sollgeschwindigkeit entstehen die gleichen Probleme wie beim Regelsystem der DE 37 01 331 A1, nämlich die permanente Anpassung von Zündung, Einspritzung, Luftzufuhr und Getriebe bei gleichzeitiger Beachtung eines optimalen Kraftstoff-Luftgemisches.

Bei Geschwindigkeits-Regelsystem gemäß der DE 196 04 220 A1 wird zur Angleichung der Fahrzeuggeschwindigkeit an die Zielgeschwindigkeit zunächst eine Ersatzgeschwindigkeit vorgegeben. Diese Ersatzgeschwindigkeit ist eine vergleichsweise komplizierte, nichtlineare Funktion, die dadurch zustande kommt, dass die Geschwindigkeitsänderung dieser Druckschrift einem vorgegebenen Optimierungskriterium folgen soll. Die nichtlineare Funktion für die Ersatzgeschwindigkeit bedeutet aber ebenfalls eine permanente Anpassung motorischer Größen und Getriebegrößen; außerdem kann bei dieser Funktion ein Überschwingen über die endgültige Zielgeschwindigkeit nicht verhindert werden, weil die Ersatzgeschwindigkeit über die Zielgeschwindigkeit hinaus führt und die Istgeschwindigkeit des Fahrzeugs der Ersatzgeschwindigkeit folgt.

Ein mit der DE 196 04 220 A1 vergleichbares Regelsystem mit einem stark nichtlinearen Verlauf für die Sollgeschwindigkeit ist auch aus der DE 35 10 174 C2 bekannt.

Der Erfindung liegt das Problem zugrunde, die Fahrsicherheit und den Komfort bei Fahrzeugen mit Geschwindigkeits-Regeleinheit zu verbessern. Es soll insbesondere vermieden werden, daß bei Annäherung an die Zielgeschwindigkeit ein Überschwingen stattfindet.

Dieses Problem wird erfindungsgemäß mit den Merkmalen des Anspruches 1 bzw. 11 gelöst.

Gemäß der Neuerung wird anstelle der Zielgeschwindigkeit eine Ersatzgeschwindigkeit der Regelung zugrunde gelegt, wobei die Ersatzgeschwindigkeit durch Beaufschlagung der Zielgeschwindigkeit mit einem Offset gebildet wird. Der Offset wird so gewählt, daß die Ersatzgeschwindigkeit oberhalb der Zielgeschwindigkeit liegt, falls auch die aktuelle Fahrzeuggeschwindigkeit im Zeitpunkt der Aktivierung der Geschwindigkeitsregelung oberhalb der Zielgeschwindigkeit liegt, so daß beim Annähern an die Zielgeschwindigkeit zunächst die Ersatzgeschwindigkeit erreicht wird. Entsprechend wird bei einer Fahrzeuggeschwindigkeit unterhalb der Zielgeschwindigkeit auch die Ersatzgeschwindigkeit auf einen Wert gesetzt, der unterhalb der Zielgeschwindigkeit liegt.

Diese Vorgehensweise bietet den Vorteil, daß das Einschwingen um den Wert der Ersatzgeschwindigkeit erfolgt. Der Offset zwischen Ziel- und Ersatzgeschwindigkeit kann derart gewählt werden, daß überschwingende Amplituden sich innerhalb des Intervalls zwischen Ersatzgeschwindigkeit und Zielgeschwindigkeit bewegen, so daß die Zielgeschwindigkeit nicht überschritten wird. Der üblicherweise um den Wert der Zielgeschwindigkeit stattfindende Einschwingvorgang wird auf die Ersatzgeschwindigkeit verschoben.

Die Neuerung kann sowohl ausgehend von höheren als auch ausgehend von tieferen Fahrzeuggeschwindigkeiten als die Zielgeschwindigkeit eingesetzt werden, so daß ein Annähern von oben und auch ein Annähern von unten an die Zielgeschwindigkeit realisiert werden kann. Es kommt sowohl ein Einsatz in Tempomatfunktionen als auch in Begrenzerfunktionen in Betracht.

Der Offset, welcher zur Festlegung der Ersatzgeschwindigkeit herangezogen wird, wird zweckmäßig aus einem Kennfeld in Abhängigkeit der aktuellen Geschwindigkeitsänderung des Fahrzeugs und vorteilhaft auch in Abhängigkeit der aktuellen Getriebe-Gangstufe bestimmt. Als weitere Begrenzung kann die aktuelle Fahrzeuggeschwindigkeit im Zeitpunkt der Zuschaltung der Ersatzgeschwindigkeit berücksichtigt werden. Gegebenenfalls wird der Offset auf einen Maximalwert begrenzt.

Für die Zuschaltung und die Abschaltung der der Geschwindigkeitsregelung zugrunde liegenden Ersatzgeschwindigkeit können verschiedene Bedingungen berücksichtigt werden. Für die Zuschaltung werden zweckmäßig die Geschwindigkeitsänderung des Fahrzeugs - Beschleunigung oder Verzögerung - und vorteilhaft auch die Fahrzeuggeschwindigkeit mit Referenzwerten verglichen. So wird insbesondere abgefragt, ob die aktuelle Fahrzeuggeschwindigkeit einmalig außerhalb eines Geschwindigkeits-Schwellenwerts liegt, um eine Aktivierung der Regelungsfunktion unter Berücksichtigung des Ersatzwertes nur für den Fall zuzulassen, daß die Fahrzeuggeschwindigkeit einen ausreichend großen Abstand zur Zielgeschwindigkeit aufweist. Anschließend wird überprüft, ob die Fahrzeuggeschwindigkeit innerhalb des Intervalls zwischen dem Schwellenwert und der Zielgeschwindigkeit liegt und ob die Geschwindigkeitsänderung einen entsprechenden Schwellenwert übersteigt. Die Zuschaltung erfolgt bevorzugt bei Vorliegen aller Bedingungen.

Bei der Abschaltung wird der Geschwindigkeits-Offset auf Null gesetzt, so daß Ersatzgeschwindigkeit und Zielgeschwindigkeit zusammenfallen. Als Bedingung für die Abschaltung kann berücksichtigt werden, ob der Reglerausgang des Regelsystems das Vorzeichen wechselt, was bei einem Nulldurchgang des Reglerausgangs-Wertes der Fall ist. Weiterhin wird zweckmäßig abgefragt, ob die Fahrzeugbeschleunigung sich in eine Verzögerung bzw. ob die Verzögerung sich in eine Beschleunigung unkehrt, was ebenfalls bei einem Nulldurchgang der Geschwindigkeitsänderung vorliegt.

Weitere Vorteile und zweckmäßige Ausführungsformen sind den weiteren Ansprüchen, der Figurenbeschreibung und den Zeichnungen zu entnehmen. Es zeigen:
- Fig. 1: ein Schaubild, aus dem der Einschwingvorgang der Fahrzeuggeschwindigkeit auf eine Zielgeschwindigkeit bei Vorgabe einer Ersatzgeschwindigkeit hervorgeht,
- Fig. 2: ein Strukturdiagramm zur Bestimmung des Geschwindigkeits-Offsets, welcher der Geschwindigkeitsregelung zugrunde gelegt wird,
- Fig. 3: ein Ablaufdiagramm mit den Bedingungen für die Zuschaltung und die Abschaltung des Geschwindigkeits-Offsets.

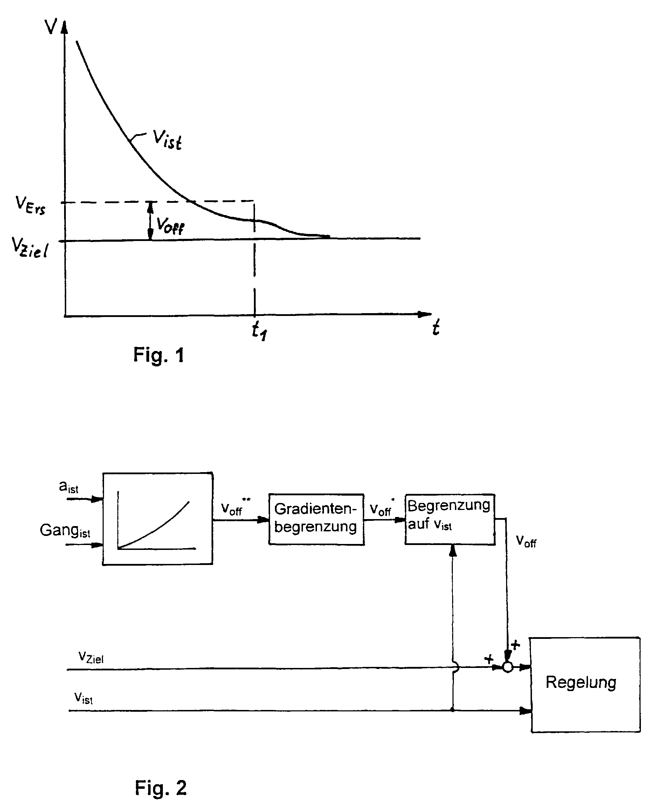

Das in Fig. 1 gezeigte Schaubild zeigt den Verlauf der tatsächlichen Fahrzeuggeschwindigkeit vᵢₛₜ bei Annäherung an eine Fahrzeug-Zielgeschwindigkeit v_{Ziel}, welche vom Fahrer oder von einem Fahrzeugsystem vorgegeben wird und die dem Geschwindigkeits-Regelsystem als Sollwert vorgegeben wird. Die Fahrzeuggeschwindigkeit vᵢₛₜ nähert sich zunächst asymptotisch dem Wert der Zielgeschwindigkeit v_{Zeil} und beginnt dann einen Einschwingvorgang, bei dem die Gefahr besteht, daß die Fahrzeuggeschwindigkeit vᵢₛₜ in Rückschwingphasen sich wieder von der Zielgeschwindigkeit v_{Ziel} entfernt. Um ein Überschwingen über die vorgegebene Zielgeschwindigkeit v_{Ziel} zu verhindern, wird dem Regelsystem eine Ersatzgeschwindigkeit v_{Ers} als Sollwert zugeführt, auf den zunächst eingeregelt wird. Die Geschwindigkeitsdifferenz zwischen Zielgeschwindigkeit v_{Ziel} und Ersatzgeschwindigkeit v_{Ers} ist mit Offset v_{off} bezeichnet. Ob die Ersatzgeschwindigkeit v_{Ers} sich oberhalb oder unterhalb der Zielgeschwindigkeit v_{Ziel} befindet, hängt davon ab, ob die Fahrzeuggeschwindigkeit vᵢₛₜ sich von oben oder von unten an die Zielgeschwindigkeit v_{Ziel} annähert. Im gezeigten Ausführungsbeispiel nach Fig. 1 fällt die Fahrzeuggeschwindigkeit vᵢₛₜ ausgehend von einem höheren Wert auf die Zielgeschwindigkeit v_{Ziel} ab, entsprechend ist die Ersatzgeschwindigkeit v_{Ers} um den Offset v_{off} gegenüber der Zielgeschwindigkeit v_{Ziel} nach oben verschoben.

Die der Geschwindigkeitsregelung zugrunde liegende Ersatzgeschwindigkeit v_{Ers} bewirkt, daß bei der Annäherung der Fahrzeuggeschwindigkeit vᵢₛₜ an die Zielgeschwindigkeit v_{Ziel} ein Einschwingen auf die Ersatzgeschwindigkeit v_{Ers} erfolgt, aufgrund des Offsets v_{off} jedoch die Zielgeschwindigkeit selbst in Überschwingphasen nicht überschritten wird. Nach einer kurzen Periode des Einschwingens wird zum Zeitpunkt t₁ der Geschwindigkeits-Offset v_{off} auf Null reduziert, so daß die Ersatzgeschwindigkeit v_{Ers} mit der Zielgeschwindigkeit v_{Ziel} zusammenfällt. Daraufhin nähert sich die Fahrzeuggeschwindigkeit vᵢₛₜ asymptotisch an die Zielgeschwindigkeit v_{Ziel} an. Aufgrund der vergleichsweise geringen Geschwindigkeitsdifferenz zwischen Ersatzgeschwindigkeit v_{Ers} und Zielgeschwindigkeit v_{Ziel} kann nach der Reduzierung des Offsets auf Null ein Überschwingen über die Zielgeschwindigkeit v_{Ziel} hinaus vermieden werden.

In Fig. 2 ist ein Strukturdiagramm zur Ermittlung des Geschwindigkeits-Offsets v_{off} dargestellt. In Abhängigkeit der aktuellen Geschwindigkeitsänderung aᵢₛₜ sowie der aktuellen im Getriebe eingelegten Sangstufe Gangᵢₛₜ wird in einem hinterlegten Kennfeld im Regelsystem ein vorläufiger Offset v_{off}** ermittelt. Im nächsten Bearbeitungsschritt wird der vorläufige Offset v_{off}** gemäß dem aktuellen Gradienden der Fahrzeuggeschwindigkeit auf einen erlaubten Höchstwert begrenzt. Der aus dieser Gradiendenbegrenzung hervorgehende vorläufige Offset v_{off}* wird in einem folgenden Bearbeitungsschritt auf einen Wert begrenzt, der der Differenz aus Fahrzeuggeschwindigkeit vᵢₛₜ und Zielgeschwindigkeit v_{Ziel} entspricht. Anschließend wird der endgültige Offset v_{off} auf die Zielgeschwindigkeit v_{Ziel} aufaddiert und gemeinsam mit der tatsächlichen Fahrzeuggeschwindigkeit vᵢₛₜ der Regelung zugeführt.

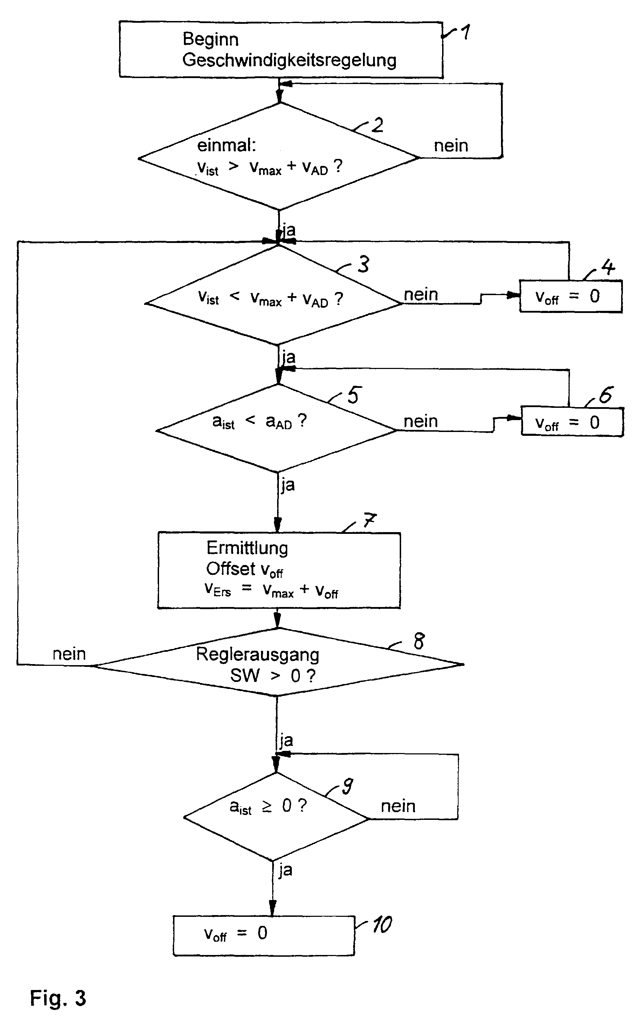

Das in Fig. 3 dargestellte Ablaufschema ist in einem Geschwindigkeits-Regelsystem eines Kraftfahrzeugs zur Einhaltung einer vorgegebenen Höchstgeschwindigkeit vₘₐₓ realisiert, die eine nicht zu überschreitende Obergrenze innerhalb eines Geschwindigkeits-Begrenzersystems darstellt. Die Höchstgeschwindigkeit vₘₐₓ repräsentiert im Ausführungsbeispiel die vom Regelsystem einzuhaltende Zielgeschwindigkeit, die entweder unmittelbar vom Fahrer vorgegeben oder von einem Fahrzeugsystem unter Berücksichtigung äußerer Bedingungen und Einflüsse wie Geschwindigkeitsbeschränkungen, Sichtverhältnisse, Verkehrsdichte etc. automatisch ermittelt wird. Das Regelsystem kann das auf die Straße übertragbare Antriebsmoment sowohl über das Motormoment der Brennkraftmaschine als auch über das Automatikgetriebe des Fahrzeugs zur Einhaltung der Zielgeschwindigkeit beeinflussen.

Anstelle einer Geschwindigkeits-Begrenzerfunktion kann auch eine Tempomatfunktion mit einer über das Regelsystem einzuhaltenden Zielgeschwindigkeit vorgegeben werden.

Gemäß dem Ablaufschema nach Fig. 3 wird in einem Verfahrensschritt 1 zunächst das Regelsystem unter Vorgabe einer einzuhaltenden Höchstgeschwindigkeit vₘₐₓ aktiviert. In den folgenden Verfahrensschritten 2, 3 und 5 wird überprüft, ob alle Bedingungen für die Ermittlung eines Geschwindigkeits-Offsets v_{off} vorliegen, der zur Berechnung einer Ersatzgeschwindigkeit v_{Ers} herangezogen wird, die als Sollwert der Geschwindigkeitsregelung zugrunde gelegt wird.

Zunächst wird gemäß Verfahrensschritt 2 abgefragt, ob die Fahrzeuggeschwindigkeit vᵢₛₜ über der Höchstgeschwindigkeit vₘₐₓ einschließlich einem Geschwindigkeits-Schwellenwert v_{AD} liegt, welcher ein Geschwindigkeitsintervall zur Höchstgeschwindigkeit vₘₐₓ definiert. Sobald die Fahrzeuggeschwindigkeit vᵢₛₜ die Summe aus Höchstgeschwindigkeit vₘₐₓ und Schwellenwert v_{AD} überschreitet, wird die Funktion in Bereitschaft geschaltet und es wird der Ja-Verzweigung entsprechend zum folgenden Verfahrensschritt 3 fortgefahren, andernfalls wird der Nein-Verzweigung zu einer erneuten Überprüfung zurückgekehrt.

Im Verfahrensschritt 3 wird nun überprüft, ob die Fahrzeuggeschwindigkeir vᵢₛₜ wieder unter die durch Addition von Höchstgeschwindigkeit vₘₐₓ und Schwellenwert v_{AD} gebildete Grenze gefallen ist. Sofern dies nicht der Fall ist, wird der Nein-Verzweigung entsprechend der Geschwindigkeits-Offset v_{off} im Verfahrensschritt 4 auf Null gesetzt und es wird zur einer erneuten Überprüfung dieser Bedingung zurückgekehrt. Sofern die Bedingung erfüllt ist, wird gemäß der Ja-Verzweigung zum Verfahrensschritt 5 fortgefahren, in welchem überprüft wird, ob die Geschwindigkeitsänderung aᵢₛₜ einen entsprechenden Schwellenwert a_{AD} unterschreitet. Sofern dies nicht der Fall ist, wird entsprechend der Nein-Verzweigung im Verfahrensschritt 6 der Geschwindigkeits-Offset v_{off} wiederum auf Null gesetzt und zu einer erneuten Überprüfung zurückgekehrt, andernfalls sind alle Bedingungen für die Ermittlung des Geschwindigkeits-Offsets v_{off} und die Ersatzgeschwindigkeit v_{Ers} erfüllt und es wird zum Verfahrensschritt 7 fortgefahren.

Die Geschwindigkeitsänderung aᵢₛₜ ist im Ausführungsbeispiel identisch mit der Fahrzeugverzögerung, da eine Annäherung der Fahrzeuggeschwindigkeit von oben an die zulässige Höchstgeschwindigkeit vₘₐₓ erfolgt.

Im Verfahrensschritt 7 wird zunächst der Geschwindigkeits-Offset v_{off} entsprechend dem in Fig. 2 dargestellten Bearbeitungsprozeß ermittelt. Die Ersatzgeschwindigkeit v_{Ers} berechnet sich aus einer Addition von Höchstgeschwindigkeit vₘₐₓ und Offset v_{off}.

Die folgenden Verfahrensschritte 8 und 9 stellen Abschaltbedingungen dar, welche erfüllt sein müssen, damit der Geschwindigkeits-Offset v_{off} auf Null gesetzt wird und zu einer regulären Geschwindigkeitsregelung auf der Grundlage der Höchstgeschwindigkeit vₘₐₓ zurückgekehrt wird.

Gemäß Verfahrensschritt 8 wird zunächst überprüft, ob der Reglerausgang SW größer als Null wird bzw. den Nulldurchgang durchschneidet. Solange sich die Fahrzeuggeschwindigkeit oberhalb des zu erreichenden Sollwertes, also oberhalb der Ersatzgeschwindigkeit v_{Ers} befindet, ist die Fahrzeuggeschwindigkeit größer als der Sollwert und der Reglerausgang SW nimmt einen Wert kleiner als Null ein. In diesem Fall wird der Nein-Verzweigung entsprechend zum Verfahrensschritt 3 zurückgekehrt und es werden die Fahrzeuggeschwindigkeit vᵢₛₜ und die Geschwindigkeitsänderung aᵢₛₜ einer erneuten Überprüfung auf Vorliegen der Bedingungen zur Berechnung eines Offsets v_{off} unterzogen. Sobald die Fahrzeuggeschwindigkeit vᵢₛₜ die Ersatzgeschwindigkeit v_{Ers} durchschneidet, kehrt sich das Vorzeichen des Reglerausganges SW um, aus dem negativen Reglerausgang wird ein positiver Reglerausgang. In diesem Fall ist die Bedingung des Verfahrensschrittes 8 erfüllt und es wird der Ja-Verzweigung entsprechend zum folgenden Verfahrensschritt 9 fortgefahren.

Im Verfahrensschritt 9 wird überprüft, ob die Geschwindigkeitsänderung aᵢₛₜ die Null-Linie durchschritten hat und nunmehr eine positiven Wert einnimmt. Solange die Fahrzeuggeschwindigkeit vᵢₛₜ sich der Höchstgeschwindigkeit vₘₐₓ annähert, befindet sich das Fahrzeug noch in der Verzögerungsphase, in der die Geschwindigkeitsänderung kleiner als Null ist. In dieser Phase ist die Bedingung des Verfahrensschrittes 9 nicht erfüllt und es wird der Nein-Verzweigung entsprechend zu einer erneuten Abfrage des Verfahrensschrittes 9 zurückgekehrt. Andernfalls hat sich die Verzögerung in eine positive Beschleunigung umgekehrt. In diesem Fall ist der Extremwert der ersten Überschwingung (vgl. Fig. 1) erreicht worden. Es wird nunmehr gemäß der Ja-Verzweigung zum Verfahrensschritt 10 fortgefahren, in welchem der Offset auf Null gesetzt wird und eine erneute Reglerinitialisierung erfolgt. Die Geschwindigkeitsregelung wird nachfolgend mit der Höchstgeschwindigkeit vₘₐₓ als Sollwert weitergeführt.

## Patentansprüche

1. Verfahren zur Einstellung einer vorgebbaren Fahrzeug-Zielgeschwindigkeit, bei dem unter Berücksichtigung von Fahrzeug-Zustands- und Betriebsgrößen in einem Geschwindigkeits-Regelsystem Stellsignale zur Manipulation des Motors und/oder des Getriebes des Kraftfahrzeugs erzeugt werden, wobei
- eine von der Zielgeschwindigkeit (v_{Ziel}) abweichende Ersatzgeschwindigkeit (v_{Ers}) vorgegeben wird, die durch Beaufschlagung der Zielgeschwindigkeit (v_{Ziel}) mit einem Offset (v_{off}) gebildet wird, wobei die Ersatzgeschwindigkeit (v_{Ers}) entsprechend der aktuellen Fahrzeuggeschwindigkeit (vᵢₛₜ) oberhalb oder unterhalb der Zielgeschwindigkeit (v_{Ziel}) liegt,
- beim Annähern der aktuellen Fahrzeuggeschwindigkeit (vᵢₛₜ) an die Zielgeschwindigkeit (v_{Ziel}) die Ersatzgeschwindigkeit (v_{Ers}) für die Geschwindigkeitsregelung herangezogen wird,
**dadurch gekennzeichnet,**
daß bei Annäherung an die Zielgeschwindigkeit (v_{Ziel}) die Fahrzeuggeschwindigkeit (vᵢₛₜ) auf die Ersatzgeschwindigkeit (v_{Ers}) einschwingt und daß der Offset (v_{off}) nach einer Periode des Einschwingens auf Null reduziert wird.

2. Verfahren nach Anspruch 1,
**dadurch gekennzeichnet,**
daß als Abschaltbedingung für die Reduzierung des Offsets (v_{off}) auf Null überprüft wird, ob die aktuelle Geschwindigkeitsänderung (aᵢₛₜ) Null wird.

3. Verfahren nach Anspruch 1 oder 2,
**dadurch gekennzeichnet,**
daß als Abschaltbedingung für die Reduzierung des Offsets (v_{off}) auf Null überprüft wird, ob der Reglerausgang (SW) des Geschwindigkeits-Regelsystems Null wird.

4. Verfahren nach einem der Ansprüche 1 bis 3,
**dadurch gekennzeichnet,**
daß der Offset (v_{off}) in Abhängigkeit der aktuellen Geschwindigkeitsänderung (aᵢₛₜ) gebildet wird.

5. Verfahren nach einem der Ansprüche 1 bis 4,
**dadurch gekennzeichnet,**
daß der Offset (v_{off}) in Abhängigkeit der aktuellen Getriebe-Gangstufe (Gangᵢₛₜ) gebildet wird.

6. Verfahren nach einem der Ansprüche 1 bis 5,
**dadurch gekennzeichnet,**
daß der Offset (v_{off}) kleiner ist als oder gleich groß ist wie die Differenz aus Fahrzeuggeschwindigkeit (vᵢₛₜ) im Zeitpunkt der Zuschaltung der Ersatzgeschwindigkeit (v_{Ers}) und Zielgeschwindigkeit (v_{Ziel}).

7. Verfahren nach einem der Ansprüche 1 bis 6,
**dadurch gekennzeichnet,**
daß der Offset (v_{off}) auf einen Maximalwert begrenzt wird.

8. Verfahren nach einem der Ansprüche 1 bis 7,
**dadurch gekennzeichnet,**
daß als Zuschaltbedingung für die Berücksichtigung der Ersatzgeschwindigkeit (v_{Ers}) bei der Geschwindigkeitsregelung geprüft wird, ob die Geschwindigkeitsänderung (aᵢₛₜ) in Richtung auf die Zielgeschwindigkeit (v_{Ziel}) einen Geschwindigkeitsänderungs-Schwellenwert (a_{AD}) übersteigt.

9. Verfahren nach einem der Ansprüche 1 bis 8,
**dadurch gekennzeichnet,**
daß als Zuschaltbedingung für die Berücksichtigung der Ersatzgeschwindigkeit (v_{Ers}) bei der Geschwindigkeitsregelung geprüft wird, ob die aktuelle Fahrzeuggeschwindigkeit (vᵢₛₜ) einmalig außerhalb eines Geschwindigkeitsintervalls zwischen der Zielgeschwindigkeit (v_{Ziel}) und einem Geschwindigkeits-Schwellenwert (v_{AD}) liegt.

10. Verfahren nach einem der Ansprüche 1 bis 9,
**dadurch gekennzeichnet,**
daß als Zuschaltbedingung für die Berücksichtigung der Ersatzgeschwindigkeit (v_{Ers}) bei der Geschwindigkeitsregelung geprüft wird, ob die aktuelle Fahrzeuggeschwindigkeit (vᵢₛₜ) innerhalb des Geschwindigkeitsintervalls zwischen der Zielgeschwindigkeit (v_{Ziel}) und dem Geschwindigkeits-Schwellenwert (v_{AD}) liegt.

11. Geschwindigkeits-Regelsystem zur Einstellung einer vorgebbaren Fahrzeug-Zielgeschwindigkeit, insbesondere Regelsystem zur Durchführung des Verfahrens nach einem der Ansprüche 1 bis 10, in dem unter Berücksichtigung von Fahrzeug-Zustands- und Betriebsgrößen Stellsignale zur Manipulation des Motors und/oder des Getriebes des Kraftfahrzeugs erzeugbar sind und dem als Sollsignal eine von der Zielgeschwindigkeit (v_{Ziel}) abweichende Ersatzgeschwindigkeit (v_{Ers}) zuführbar ist, welche durch Beaufschlagung der Zielgeschwindigkeit (v_{Ziel}) mit einem Offset (v_{off}) zu ermitteln ist, wobei die Ersatzgeschwindigkeit (v_{Ers}) oberhalb der Zielgeschwindigkeit (v_{Ziel}) liegt, sofern auch die aktuelle Fahrzeuggeschwindigkeit (vᵢₛₜ) oberhalb der Zielgeschwindigkeit (v_{Ziel}) liegt, und die Ersatzgeschwindigkeit (v_{Ers}) unterhalb der Zielgeschwindigkeit (v_{Ziel}) liegt, sofern auch die aktuelle Fahrzeuggeschwindigkeit (vᵢₛₜ) unterhalb der Zielgeschwindigkeit (v_{Ziel}) liegt,
**dadurch gekennzeichnet,**
daß bei Annäherung an die Zielgeschwindigkeit (v_{Ziel}) die Fahrzeuggeschwindigkeit (vᵢₛₜ) auf die Ersatzgeschwindigkeit (v_{Ers}) einschwingt und daß der Offset (v_{off}) nach einer Periode des Einschwingens auf Null reduziert wird.
